(19) Europäisches Patentamt
European Patent Office
Office européen des brevets

(11) **EP 2 873 653 A1**

(12) **DEMANDE DE BREVET EUROPEEN**

(43) Date de publication:
**20.05.2015 Bulletin 2015/21**

(51) Int Cl.:
***C03C 3/095*** *(2006.01)* ***C03C 4/10*** *(2006.01)*

(21) Numéro de dépôt: **13193345.9**

(22) Date de dépôt: **18.11.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeurs:
• **AGC Glass Europe**
**1348 Louvain-la-Neuve (BE)**
• **Asahi Glass Co., Ltd.**
**Chiyoda-ku**
**Tokyo 100-8405 (JP)**

(72) Inventeurs:
• **Lambricht, Thomas**
**1360 Perwez (BE)**
• **Dogimont, Audrey**
**1150 Woluwe-Saint-Pierre (BE)**

(74) Mandataire: **Bayot, Daisy**
**AGC Glass Europe**
**Technovation Centre**
**IP Department**
**Rue Louis Blériot, 12**
**6041 Gosselies (BE)**

(54) **Feuille de verre à haute transmission aux rayonnements infrarouges**

(57) L'invention concerne une feuille de verre à haute transmission aux rayonnements infrarouges, utilisable notamment dans un écran, panneau ou tablette tactile. Plus précisément, l'invention concerne une feuille de verre ayant une composition qui comprend, en une teneur exprimée en pourcentages en poids total de verre :

| | |
|---|---|
| $SiO_2$ | 55 - 85% |
| $Al_2O_3$ | 0 - 30% |
| $B_2O_3$ | 0 - 20% |
| $Na_2O$ | 0 - 25% |
| CaO | 0 - 20% |
| MgO | 0 - 15% |
| $K_2O$ | 0 - 20% |
| BaO | 0 - 20% |
| Fer total (exprimé sous forme de $Fe_2O_3$) | 0,002 - 0,06%, |

et une teneur en cérium (exprimée sous forme de $CeO_2$) allant de 0,001 à 1%. L'invention concerne également l'utilisation d'une telle feuille de verre dans un dispositif utilisant un rayonnement infrarouge se propageant essentiellement à l'intérieur de ladite feuille. Grâce à sa haute transmission aux rayonnements infrarouges, la feuille de verre selon l'invention peut être avantageusement utilisée, par exemple, dans un écran ou panneau ou tablette, la feuille de verre définissant une surface tactile.

**Description**

**1. Domaine de l'invention**

La présente invention concerne une feuille de verre présentant une haute transmission aux rayonnements infrarouges. Le domaine général de l'invention est celui des panneaux tactiles optiques montés au-dessus de zones de surfaces d'affichage.

Grâce à sa haute transmission aux rayonnements infrarouges (IR), la feuille de verre selon l'invention peut en effet être avantageusement utilisée dans un écran ou panneau ou tablette tactile (« touchscreen » ou « touchpanel » ou « touchpad ») utilisant la technologie optique dite de « Planar Scatter Détection » (PSD) ou encore de « Frustrated total internal reflection » (FTIR) (ou tout autre technologie nécessitant une haute transmission aux IR) pour détecter la position d'un ou plusieurs objets (par exemple, un doigt ou un stylet) sur une surface de ladite feuille.

L'invention a dès lors également trait à un écran, un panneau ou une tablette tactile comprenant une telle feuille de verre.

**2. Solutions de l'art antérieur**

Les technologies PSD et FTIR permettent d'obtenir des écrans/panneaux tactiles à détections multiples qui sont peu onéreux et qui peuvent avoir une surface tactile relativement importante (par exemple, de 3 à 100 pouces) tout en ayant une faible épaisseur.

Ces deux technologies impliquent :

(i) l'injection d'un rayonnement infrarouge (IR), grâce à des LED's par exemple, dans un substrat transparent aux infrarouges à partir d'un ou plusieurs bords/tranches ;

(ii) la propagation du rayonnement infrarouge à l'intérieur dudit substrat (qui joue alors le rôle de guide d'onde), par l'intermédiaire d'un phénomène optique de réflexion totale interne (aucun rayonnement ne « sort » du substrat);

(iii) le contact de la surface du substrat avec un objet quelconque (par exemple, un doigt ou un stylet) entraînant une perturbation locale par diffusion du rayonnement dans toutes les directions ; certains des rayons déviés vont ainsi pouvoir « sortir » du substrat.

Dans la technologie FTIR, les rayons déviés forment un point lumineux infrarouge sur la surface inférieure du substrat, opposée à la surface tactile. Ceux-ci sont vus par une caméra spéciale située en dessous du dispositif.

La technologie PSD implique, quant à elle, deux étapes supplémentaires à la suite des étapes (i)-(iii) :

(iv) l'analyse par un détecteur du rayonnement IR résultant au niveau du bord du substrat; et

(v) le calcul par des algorithmes de la/des position(s) du/des objet(s) en contact avec la surface, à partir du rayonnement détecté. Cette technologie est notamment exposée dans le document US2013021300A1.

A la base, le verre est un matériau de choix pour les panneaux tactiles du fait de ses propriétés mécaniques, de sa durabilité, de sa résistance à la griffe, de sa clarté optique et car il peut être renforcé chimiquement ou thermiquement.

Dans le cas de panneaux de verre utilisés pour la technologie PSD ou FTIR et de surface très importante et donc de longueur/largeur relativement grande, le trajet optique du rayonnement IR injecté est long. Dans ce cas, l'absorption du rayonnement IR par le matériau du verre joue donc significativement sur la sensibilité du panneau tactile qui peut alors diminuer de façon indésirable dans la longueur/largeur du panneau. Dans le cas de panneaux de verre utilisés pour la technologie PSD ou FTIR et de surface plus petite et donc avec un trajet optique du rayonnement IR injecté plus court, l'absorption du rayonnement IR par le matériau du verre joue également, en particulier sur la consommation énergétique du dispositif intégrant le panneau de verre.

Ainsi, une feuille de verre hautement transparente aux rayonnements infrarouges est d'une grand utilité dans ce contexte, afin de garantir une sensibilité intacte ou suffisante sur la totalité de la surface tactile lorsque cette surface est importante. En particulier, une feuille de verre avec un coefficient d'absorption dans la gamme de longueurs d'onde allant de 780 à 1200 nm, utilisées généralement dans ces technologies, égal ou même inférieur à 1 m$^{-1}$ est idéal.

Afin d'obtenir une haute transmission dans les infrarouges (et dans le visible), il est connu de diminuer la teneur totale en fer dans le verre (exprimée en terme de $Fe_2O_3$ selon la pratique standard dans le domaine) en obtenant des verres à basse teneur en fer (ou « low iron »). Les verres de types silicates contiennent toujours du fer car celui-ci est présent comme impureté dans la plupart des matières premières utilisées (sable, calcaire, dolomie...). Le fer existe dans la structure du verre sous la forme d'ions ferriques $Fe^{3+}$ et d'ions ferreux $Fe^{2+}$. La présence d'ions ferriques $Fe^{3+}$ confère au verre une légère absorption de la lumière visible de faible longueur d'onde et une plus forte absorption dans le proche ultraviolet (bande d'absorption centrée sur 380 nm), tandis que la présence d'ions ferreux $Fe^{2+}$ (parfois exprimée en oxyde FeO) provoque une forte absorption dans le proche infrarouge (large bande d'absorption centrée sur 1050 nm). Ainsi, l'augmentation de la teneur en fer totale (sous ses deux formes) accentue l'absorption dans le visible et l'infrarouge. De plus, une forte concentration en ions ferreux $Fe^{2+}$ entraîne une diminution de la transmission dans l'infrarouge (en particulier, le proche infrarouge). Toutefois, pour atteindre un coefficient d'absorption dans la gamme de longueurs d'onde allant de 780 à 1200 nm suffisamment faible pour les applications tactiles uniquement en jouant sur la teneur en fer total, cela nécessiterait une diminution tellement importante de cette teneur en fer total, que (i) soit cela entraînerait des coûts de production beaucoup trop élevés, provenant du besoin de matières premières très pures (qui parfois même n'existent pas suffisamment pures), (ii) soit cela poserait des problèmes de production (notamment l'usure prématurée du four et/ou des difficultés de chauffe du verre dans le four).

Il est également connu, pour augmenter davantage la transmission du verre, d'oxyder le fer présent dans le verre, c'est-à-dire de diminuer la teneur en ions ferreux au profit de la teneur en ions ferriques. Le degré d'oxydation d'un verre est donné par son rédox, défini comme le rapport en poids d'atome de $Fe^{2+}$ par rapport au poids total des atomes de fer présents dans le verre, $Fe^{2+}/Fe$ total.

Afin de diminuer le rédox du verre, il est connu d'ajouter au batch de matières premières un composant oxydant. Cependant, la plupart des oxydants connus (sulfates, nitrates, ...) ont un pouvoir oxydant qui n'est pas suffisamment fort pour atteindre les valeurs de transmission IR recherchées pour l'application de panneaux tactiles utilisant la technologie FTIR ou PSD.

## 3. Objectifs de l'invention

L'invention, dans au moins un de ses modes de réalisation, a pour objectif de fournir une feuille de verre avec une haute transmission aux rayonnements infrarouges. En particulier, l'invention a pour objectif de fournir une feuille de verre avec une haute transmission aux rayonnements infrarouges proches.

Un autre objectif de l'invention, dans au moins un de ses modes de réalisation, est de fournir une feuille de verre qui, lorsqu'elle est utilisée comme surface tactile dans des écrans, panneaux ou tablettes tactiles de grandes dimensions, n'entraîne pas ou peu de perte de sensibilité de la fonction tactile.

Un autre objectif de l'invention, dans au moins un de ses modes de réalisation, est de fournir une feuille de verre qui, lorsqu'elle est utilisée comme surface tactile dans des écrans, panneaux ou tablettes tactiles de dimensions plus modestes, est favorable à la consommation énergétique du dispositif.

Un autre objectif de l'invention, dans au moins un de ses modes de réalisation, est de fournir une feuille de verre avec une haute transmission aux rayonnements infrarouges et avec une esthétique acceptable pour l'application choisie.

Finalement, l'invention a également pour objectif de fournir une feuille de verre avec une haute transmission aux rayonnements infrarouges et qui est peu onéreuse à produire.

## 4. Exposé de l'invention

L'invention concerne une feuille de verre ayant une composition qui comprend, en une teneur exprimée en pourcentages en poids total de verre :

| | |
|---|---|
| $SiO_2$ | 55 - 85% |
| $Al_2O_3$ | 0 - 30% |
| $B_2O_3$ | 0 - 20% |
| $Na_2O$ | 0 - 25% |
| CaO | 0 - 20% |
| MgO | 0 - 15% |
| $K_2O$ | 0 - 20% |
| BaO | 0 - 20% |
| Fer total (exprimé sous forme de $Fe_2O_3$) | 0,002 - 0,06%. |

Conformément à un mode de réalisation particulier, ladite composition comprend en outre une teneur en cérium (exprimée sous forme de $CeO_2$) allant de 0,001 à 1% en poids par rapport au poids total du verre.

Ainsi, l'invention repose sur une approche tout à fait nouvelle et inventive car elle permet de résoudre le problème technique posé. Les inventeurs ont en effet mis en évidence, de manière surprenante, qu'il était possible, en combinant dans une composition de verre une basse teneur en fer et du cérium, dans une gamme de teneurs spécifique, d'obtenir une feuille de verre très transparente dans l'IR, sans impact sur son esthétique, sa couleur. De plus, le cérium dans une telle composition permet d'obtenir un effet filtre aux ultraviolets (ou « UV cut »), qui s'avère être un avantage indéniable lors de l'utilisation d'une telle feuille de verre en tant que surface externe d'un écran, panneau ou tablette tactile, qui protège alors des rayonnements UV des composants électroniques et/ou organiques (par exemple, l'écran LCD ou l'encapsulant) situés à l'arrière de la feuille.

Dans l'ensemble du présent texte, lorsqu'une gamme est indiquée, les extrémités sont inclues. En outre, toutes les valeurs entières et sous-domaines dans gamme numérique sont expressément inclues comme si explicitement écrites. Dans l'ensemble du présent texte également, les valeurs de teneur en pourcentages sont des valeurs pondérales, exprimées par rapport au poids total du verre.

La feuille de verre selon l'invention est faite de verre pouvant appartenir à diverses catégories. Le verre peut ainsi être un verre de type silico-sodo-calcique, alumino-silicate, boro-silicate,... De manière préférée et pour des raisons de coûts plus faibles de production, la feuille de verre selon l'invention est une feuille de verre silico-sodo-calcique. Selon ce mode de réalisation préféré, la composition de la feuille de verre peut comprendre, en une teneur exprimée en pourcentages en poids total de verre :

| | |
|---|---|
| $SiO_2$ | 55 - 78% |
| $Al_2O_3$ | 0 - 18% |
| $B_2O_3$ | 0 - 18% |
| $Na_2O$ | 5 - 20% |
| CaO | 0 - 15% |
| MgO | 0 - 10% |
| $K_2O$ | 0 - 10% |
| BaO | 0 - 5% |
| Fer total (exprimé sous forme de $Fe_2O_3$) | 0,002 - 0,06%. |

De manière plus préférée, selon ce mode de réalisation, la composition de la feuille de verre peut comprendre, en une teneur exprimée en pourcentages en poids total de verre :

| | |
|---|---|
| $SiO_2$ | 60 - 75% |
| $Al_2O_3$ | 0 - 6% |
| $B_2O_3$ | 0 - 4% |
| CaO | 0 - 15% |
| MgO | 0 - 10% |
| $Na_2O$ | 5 - 20% |
| $K_2O$ | 0 - 10% |
| BaO | 0 - 5% |
| Fer total (exprimé sous forme de $Fe_2O_3$) | 0,002 - 0,06%. |

D'autres caractéristiques et avantages de l'invention apparaîtront plus clairement à la lecture de la description suivante.

Par verre au sens de l'invention, on entend un matériau totalement amorphe, excluant donc tout matériau cristallin, même partiellement (comme par exemple, les matériaux vitro-cristallins ou vitrocéramiques).

La feuille de verre selon l'invention peut être une feuille de verre obtenue par un procédé de flottage, d'étirage, de laminage ou tout autre procédé connu pour fabriquer une feuille de verre au départ d'une composition de verre en fusion. Selon un mode de réalisation préférentiel selon l'invention, la feuille de verre est une feuille de verre flotté. Par feuille de verre flotté, on entend une feuille de verre formée par le procédé de flottage (ou « float »), consistant à déverser le verre en fusion sur un bain d'étain fondu, sous conditions réductrices. Une feuille de verre flotté comporte, de façon connue, une face dite « face étain », c'est-à-dire une face enrichie en étain dans la masse du verre proche de la surface de la feuille. Par enrichissement en étain, on entend une augmentation de la concentration en étain par rapport à la composition du verre à coeur qui peut être substantiellement nulle (exempte d'étain) ou non.

La feuille de verre selon l'invention peut avoir des dimensions diverses et relativement importantes. Elle peut, par exemple, avoir des dimensions allant jusqu'à 3,21 m x 6 m ou 3,21 m x 5,50 m ou 3,21 m x 5,10 m ou 3,21 m x 4,50 m (feuille de verre appelée « PLF ») ou encore, par exemple, 3,21 m x 2,55 m ou 3,21 m x 2,25 m (feuille de verre appelée « DLF »).

La feuille de verre selon l'invention peut avoir une épaisseur variant entre 0,1 et 25 mm. Avantageusement, dans le cas de l'application de panneaux tactiles, la feuille de verre selon l'invention peut avoir une épaisseur variant entre 0,1 et 6 mm. De manière préférée, dans le cas de l'application d'écrans tactiles, pour des raisons de poids, l'épaisseur de la feuille de verre selon l'invention est de 0,1 à 2,2 mm.

Selon l'invention, la composition de l'invention comprend une teneur en fer total (exprimé en terme de $Fe_2O_3$) allant de 0,002 à 0,06% en poids par rapport au poids total du verre. Une teneur en fer total (exprimé sous forme de $Fe_2O_3$) inférieure ou égale à 0,06% en poids permet d'augmenter davantage la transmission IR de la feuille de verre. La valeur minimale permet de ne pas trop pénaliser le coût du verre car de si faibles valeurs en fer nécessitent souvent des matières premières très pures onéreuses ou bien une purification de celles-ci. De manière préférée, la composition comprend une teneur en fer total (exprimé sous forme de $Fe_2O_3$) allant de 0,002 à 0,04% en poids par rapport au poids total du verre. De manière toute préférée, la composition comprend une teneur en fer total (exprimé sous forme de $Fe_2O_3$) allant de 0,002 à 0,02% en poids par rapport au poids total du verre.

Selon un mode de réalisation de l'invention, la composition de l'invention comprend une teneur en cérium (exprimée sous forme de $CeO_2$) allant de 0,005 à 0,5% en poids par rapport au poids total du verre. De préférence, la composition de l'invention comprend une teneur en cérium (exprimée sous forme de $CeO_2$) allant de 0,005 à 0,3% en poids par rapport au poids total du verre et, de manière toute préférée, de 0,01 à 0,2%. De telles gammes de teneurs en cérium permet d'obtenir une transmission importante dans l'IR, sans impacter significativement la coloration de la feuille de verre. En effet, le cérium, lorsqu'il est présent en quantité significative, donne une coloration légèrement jaunâtre au verre.

Selon un mode de réalisation avantageux de l'invention, la composition de l'invention présente un rapport cérium/fer total tel que : $0,1 \leq CeO_2/Fe_2O_3 \leq 50$. Selon ce mode de réalisation et de manière préférée, la composition présente un rapport cérium/fer total tel que $1 \leq CeO_2/Fe_2O_3 \leq 50$. Une telle gamme de rapport cérium/fer total permet d'obtenir une transmission importante dans l'IR, sans impacter significativement la coloration de la feuille de verre. De manière toute préférée, la composition présente un rapport cérium/fer total tel que $1 \leq CeO_2/Fe_2O_3 \leq 25$. Alternativement, la composition présente un rapport cérium/fer total tel que $1 < CeO_2/Fe_2O_3 \leq 10$.

Selon un autre mode de réalisation de l'invention, la composition comprend une teneur en $Fe^{2+}$ (exprimée sous forme de FeO) inférieure à 20 ppm. Cette gamme de teneurs permet d'obtenir des propriétés très satisfaisantes et en particulier, en termes de transmission des IR. De manière préférée, la composition comprend une teneur en $Fe^{2+}$ (exprimée sous forme de FeO) inférieure à 10 ppm. De manière toute préférée, la composition comprend une teneur en $Fe^{2+}$ (exprimée sous forme de FeO) inférieure à 5 ppm.

Selon l'invention, la feuille de verre possède une haute transmission des rayonnements IR. Plus précisément, la feuille de verre de la présente invention possède une haute transmission des rayonnements dans le proche infrarouge.

Pour quantifier la bonne transmission du verre dans le domaine des infrarouges, dans la présente description, on utilisera les coefficients d'absorption aux longueurs d'onde de 1050, 950 et 850 nm, qui doivent dès lors être aussi faibles que possible afin d'obtenir une bonne transmission. Le coefficient d'absorption est défini par le rapport entre l'absorbance et la longueur du chemin optique parcouru par un rayonnement électromagnétique dans un milieu donné. Il s'exprime en $m^{-1}$. Il est donc indépendant de l'épaisseur du matériau mais il est fonction de la longueur d'onde du rayonnement absorbé et de la nature chimique du matériau.

Dans le cas du verre, le coefficient d'absorption (nu) à une longueur d'onde $\lambda$ choisie peut être calculé à partir d'une mesure en transmission (*T*) ainsi que de l'indice de réfraction n du matériau (*thick* = épaisseur), les valeurs de n, $\rho$ et T étant fonction de la longueur d'onde $\lambda$ choisie :

$$nu = -\frac{1}{thick} . ln\left[\frac{-(1-\rho)^2 + \sqrt{(1-\rho)^4 + 4.T^2.\rho^2}}{2.T.\rho^2}\right]$$

avec $\rho = (n-1)^2/(n+1)^2$

Avantageusement, la feuille de verre selon l'invention a un coefficient d'absorption à la longueur d'onde de 1050 nm inférieur à 5 $m^{-1}$. De préférence, la feuille de verre selon l'invention a un coefficient d'absorption à la longueur d'onde de 1050 nm inférieur ou égal à 2 $m^{-1}$. De manière toute préférée, la feuille de verre selon l'invention a un coefficient d'absorption à la longueur d'onde de 1050 nm inférieur ou égale à 1 $m^{-1}$.

Avantageusement également, la feuille de verre selon l'invention a un coefficient d'absorption à la longueur d'onde 950 nm inférieur à 5 $m^{-1}$. De préférence, la feuille de verre selon l'invention a un coefficient d'absorption à la longueur d'onde de 950 nm inférieur ou égal à 2 $m^{-1}$. De manière toute préférée, la feuille de verre selon l'invention a un coefficient d'absorption à la longueur d'onde de 950 nm inférieur ou égale à 1 $m^{-1}$.

Avantageusement également, la feuille de verre selon l'invention a un coefficient d'absorption à la longueur d'onde de 850 nm inférieur à 5 $m^{-1}$. De préférence, la feuille de verre selon l'invention a un coefficient d'absorption à la longueur d'onde de 850 nm inférieur ou égal à 2 $m^{-1}$. De manière toute préférée, la feuille de verre selon l'invention a un coefficient d'absorption à la longueur d'onde de 850 nm inférieur ou égale à 1 m$^{-1}$.

Selon un mode de réalisation de l'invention, la composition de la feuille de verre peut comprendre, en plus des impuretés contenues notamment dans les matières premières, une faible proportion d'additifs (tels que des agents aidant la fusion ou l'affinage du verre) ou d'éléments provenant de la dissolution des réfractaires constituant les fours de fusion.

Selon un mode de réalisation avantageux de l'invention, la composition de la feuille de verre peut comprendre en outre un ou plusieurs autre(s) colorant(s), en quantité adaptée en fonction de l'effet recherché. Ce(ces) colorant(s) peu(ven)t servir, par exemple, à « neutraliser » la légère couleur jaunâtre pouvant être générée par la présence de quantités significatives de cérium et rendre ainsi la coloration du verre de l'invention plus neutre. Alternativement, ce(ces) colorants peu(ven)t servir à obtenir une couleur recherchée.

Selon un autre mode de réalisation avantageux de l'invention, combinable au mode de réalisation précédent, la feuille de verre peut être revêtue d'une couche ou d'un film qui permet de modifier ou neutraliser la légère couleur jaunâtre pouvant être générée par la présence de quantités significatives de cérium (par exemple, un film de PVB coloré).

La feuille de verre selon l'invention peut avantageusement être trempée chimiquement ou thermiquement.

Selon un mode de réalisation de l'invention, la feuille de verre est revêtue d'au moins une couche mince transparente et conductrice de l'électricité. Une couche mince transparente et conductrice selon l'invention peut, par exemple, être une couche à base de $SnO_2$:F, de $SnO_2$:Sb ou d'ITO (oxyde d'indium et d'étain), ZnO:Al ou encore ZnO:Ga.

Selon un autre mode de réalisation avantageux de l'invention, la feuille de verre est revêtue d'au moins une couche antiréfléchissante (ou anti-reflet). Ce mode de réalisation est évidemment avantageux dans le cas d'une utilisation de la feuille de verre de l'invention comme face avant d'un écran. Une couche antiréfléchissante selon l'invention peut, par exemple, être une couche à base de silice poreuse à bas indice de réfraction ou elle peut être constituée de plusieurs strates (empilement), notamment un empilement de couches de matériau diélectrique alternant des couches à bas et hauts indices de réfraction et se terminant par une couche à bas indice de réfraction.

Selon un autre mode de réalisation, la feuille de verre est revêtue d'au moins une couche anti-empreinte ou a été traitée de manière à réduire/empêcher les empreintes de se marquer. Ce mode de réalisation est également avantageux dans le cas d'une utilisation de la feuille de verre de l'invention comme face avant d'un écran tactile. Une telle couche ou un tel traitement peut être combinée à une couche mince transparente et conductrice de l'électricité, déposée sur la face opposée. Une telle couche peut être combinée à une couche antiréfléchissante déposée sur la même face, la couche anti-empreinte étant à l'extérieur de l'empilement et recouvrant donc la couche antiréfléchissante.

En fonction des applications et/ou des propriétés désirées, d'autres couches peuvent être déposées sur l'une et/ou l'autre face de la feuille de verre selon l'invention.

En outre, l'invention concerne également un écran ou un panneau ou une tablette tactile, comprenant au moins une feuille de verre selon l'invention, définissant une surface tactile. Selon ce mode de réalisation, l'écran ou le panneau ou la tablette tactile utilise avantageusement la technologie optique FTIR ou PSD. En particulier, pour un écran, la feuille de verre est avantageusement montée au-dessus d'une surface d'affichage.

Finalement, l'invention concerne également l'utilisation d'une feuille de verre ayant une composition qui comprend, en une teneur exprimée en pourcentages en poids total de verre :

| | |
|---|---|
| $SiO_2$ | 55 - 85% |
| $Al_2O_3$ | 0 - 30% |
| $B_2O_3$ | 0 - 20% |
| $Na_2O$ | 0 - 25% |
| CaO | 0 - 20% |
| MgO | 0 - 15% |
| $K_2O$ | 0 - 20% |
| BaO | 0 - 20% |
| Fer total (exprimé sous forme de $Fe_2O_3$) | 0,002 - 0,06% |
| une teneur en cérium telle que : $0,001\% \leq CeO_2 \leq 1\%$ ; | |

dans un dispositif utilisant un rayonnement infrarouge se propageant essentiellement à l'intérieur de ladite feuille.

Par rayonnement se propageant essentiellement à l'intérieur de la feuille, on entend un rayonnement qui voyage dans la masse de la feuille de verre entre les deux faces principales de la feuille.

Avantageusement, selon un mode de réalisation de l'utilisation selon l'invention, la propagation du rayonnement infrarouge se fait par réflexion totale interne. Selon ce mode de réalisation, le rayonnement infrarouge peut être injecté à l'intérieur de la feuille de verre à partir d'un ou plusieurs bord(s) de ladite feuille. Par bord de la feuille, on entend chacune des quatre surfaces définies par l'épaisseur de la feuille et sensiblement perpendiculaires aux deux faces principales de la feuille. Toujours selon ce mode de réalisation, le rayonnement infrarouge peut être injecté à l'intérieur de la feuille de verre à partir d'une ou les deux face(s) principale(s) avec un certain angle.

Selon un mode de réalisation de l'utilisation selon l'invention, la composition de l'invention comprend une teneur en cérium (exprimée sous forme de $CeO_2$) allant de 0,005 à 0,5% en poids par rapport au poids total du verre. De préférence, la composition de l'invention comprend une teneur en cérium (exprimée sous forme de $CeO_2$) allant de 0,005 à 0,3% en poids par rapport au poids total du verre et, de manière toute préférée, de 0,01 à 0,2%.

Selon un autre mode de réalisation de l'utilisation selon l'invention, la composition de la feuille de verre peut comprendre, en une teneur exprimée en pourcentages en poids total de verre :

| | |
|---|---|
| $SiO_2$ | 55 - 78% |
| $Al_2O_3$ | 0 - 18% |
| $B_2O_3$ | 0 - 18% |
| $Na_2O$ | 5 - 20% |
| CaO | 0 - 15% |
| MgO | 0 - 10% |
| $K_2O$ | 0 - 10% |
| BaO | 0 - 5% |
| Fer total (exprimé sous forme de $Fe_2O_3$) | 0,002 - 0,06%. |

De manière plus préférée, selon ce mode de réalisation de l'utilisation de l'invention, la composition de la feuille de verre peut comprendre, en une teneur exprimée en pourcentages en poids total de verre:

| | |
|---|---|
| $SiO_2$ | 60 - 75% |
| $Al_2O_3$ | 0 - 6% |
| $B_2O_3$ | 0 - 4% |
| CaO | 0 - 15% |
| MgO | 0 - 10% |
| $Na_2O$ | 5 - 20% |
| $K_2O$ | 0 - 1% |
| BaO | 0 - 5% |
| Fer total (exprimé sous forme de $Fe_2O_3$) | 0,002 - 0,06%. |

Selon un autre mode de réalisation de l'utilisation selon l'invention, la composition comprend avantageusement une teneur en fer total (exprimée sous forme de $Fe_2O_3$) de 0,002 à 0,04% en poids par rapport au poids total du verre et de manière préférée, une teneur en fer total (exprimée sous forme de $Fe_2O_3$) de 0,002 à 0,02% en poids par rapport au poids total du verre.

Les exemples qui suivent illustrent l'invention, sans intention de limiter de quelque façon sa couverture.

Exemples

Les matières premières ont été mélangées sous forme de poudre et placées en creuset pour la fusion, selon la composition de base précisée dans le tableau ci-dessous.

| Composition de base | Teneur [% en poids] |
|---|---|
| $SiO_2$ | 72 |
| CaO | 9 |
| $K_2O$ | 0.3 |
| $Na_2O$ | 14 |
| $SO_3$ | 0.3 |
| $Al_2O_3$ | 0.8 |
| MgO | 4.2 |
| $Fe_2O_3$ | 0.01 |

Différents échantillons ont été préparés avec des quantités de cérium variables et la composition de base maintenue fixe. L'échantillon 1 (comparatif) correspond à un verre de l'état de la technique, à basse teneur en fer et sans cérium ajouté (et dit « extra-clair »). Les échantillons 2-4 correspondent à des compositions de feuille de verre selon l'invention.

Les propriétés optiques de chaque échantillon de verre sous forme de feuille ont été déterminées et en particulier, les coefficients d'absorption aux longueurs d'onde de 850, 950 et 1050 nm ont été déterminés via une mesure en transmission sur un spectrophotomètre Perkin Elmer lambda 950 équipé d'une sphère d'intégration de 150 mm de diamètre, l'échantillon étant placé au port d'entrée de la sphère pour la mesure.

Le tableau ci-dessous présente les coefficients d'absorption aux longueurs d'onde de 850, 950 et 1050 nm obtenus en fonction de la quantité de cérium.

| *Echantillon* | ppm de cérium(exprimé sous forme de $CeO_2$) | coefficient d'absorption à 850nm $(m^{-1})$ | coefficient d'absorption à 950nm $(m^{-1})$ | coefficient d'absorption à 1050nm $(m^{-1})$ |
|---|---|---|---|---|
| *1* *(comparatif)* | 0 (pas d'addition dans le mélange) | 3.2 | 3.8 | 4.2 |
| *2* | 85 | 1.9 | 2.5 | 2.8 |
| *3* | 670 | 0 | 0.1 | 0.6 |
| *4* | 4600 | 0 | 0.1 | 0.2 |

Ces résultats montrent que l'ajout de cérium, dans une gamme de teneurs selon l'invention, permet de diminuer significativement voire rendre nul les coefficients d'absorption aux longueurs d'onde de 850, 950 et 1050 nm, et donc de manière générale, de diminuer l'absorption des rayonnements infrarouges proches.

**Revendications**

1. Feuille de verre ayant une composition qui comprend, en une teneur exprimée en pourcentages en poids total de verre :

|   |   |
|---|---|
| $SiO_2$ | 55 - 85% |
| $Al_2O_3$ | 0 - 30% |
| $B_2O_3$ | 0 - 20% |
| $Na_2O$ | 0 - 25% |
| CaO | 0 - 20% |
| MgO | 0 - 15% |
| $K_2O$ | 0 - 20% |
| BaO | 0 - 20% |
| Fer total (exprimé sous forme de $Fe_2O_3$) | 0,002 - 0,06% ; |

**caractérisée en ce que** ladite composition comprend une teneur en cérium (exprimée sous forme de $CeO_2$) allant de 0,001 à 1% en poids par rapport au poids total du verre.

2. Feuille de verre selon la revendication précédente, **caractérisée en ce que** la composition comprend une teneur en cérium (exprimée sous forme de $CeO_2$) allant de 0,005 à 0,5 % en poids par rapport au poids total du verre.

3. Feuille de verre selon la revendication 1, **caractérisée en ce que** la composition comprend une teneur en cérium (exprimée sous forme de $CeO_2$) allant de 0,005 à 0,3% en poids par rapport au poids total du verre.

4. Feuille de verre selon la revendication précédente, **caractérisée en ce que** la composition comprend une teneur en cérium (exprimée sous forme de $CeO_2$) allant de 0,01 à 0,2% en poids par rapport au poids total du verre.

5. Feuille de verre selon l'une des revendications précédentes, **caractérisée en ce que** la composition comprend une teneur en fer total (exprimée sous forme de $Fe_2O_3$) de 0,002 à 0,04% en poids par rapport au poids total du verre.

6. Feuille de verre selon la revendication précédente, **caractérisée en ce que** la composition comprend une teneur en fer total (exprimée sous forme de $Fe_2O_3$) de 0,002 à 0,02% en poids par rapport au poids total du verre.

7. Feuille de verre selon l'une des revendications précédentes, **caractérisée en ce que** la composition comprend une teneur en $Fe^{2+}$ (exprimée sous forme de FeO) inférieure à 20 ppm.

8. Feuille de verre selon la revendication précédente, **caractérisée en ce que** la composition comprend une teneur en $Fe^{2+}$ (exprimée sous forme de FeO) inférieure à 10 ppm.

9. Feuille de verre selon la revendication précédente, **caractérisée en ce que** la composition comprend une teneur en $Fe^{2+}$ (exprimée sous forme de FeO) inférieure à 5 ppm.

10. Feuille de verre selon l'une des revendications précédentes, **caractérisée en ce que** la composition comprend, en une teneur exprimée en pourcentages en poids total de verre :

| | |
|---|---|
| $SiO_2$ | 55 - 78% |
| $Al_2O_3$ | 0 - 18% |
| $B_2O_3$ | 0 - 18% |
| $Na_2O$ | 5 - 20% |
| CaO | 0 - 15% |
| MgO | 0 - 10% |
| $K_2O$ | 0 - 10% |
| BaO | 0 - 5%. |

11. Ecran ou panneau ou tablette tactile, comprenant au moins une feuille de verre selon l'une des revendications 1 à 10 définissant une surface tactile.

12. Ecran ou panneau ou tablette tactile selon la revendication précédente, utilisant la technologie optique FTIR ou PSD.

13. Utilisation d'une feuille de verre ayant une composition qui comprend, en une teneur exprimée en pourcentages en poids total de verre :

| | |
|---|---|
| $SiO_2$ | 55 - 85% |
| $Al_2O_3$ | 0 - 30% |
| $B_2O_3$ | 0 - 20% |
| $Na_2O$ | 0 - 25% |
| CaO | 0 - 20% |
| MgO | 0 - 15% |
| $K_2O$ | 0 - 20% |
| BaO | 0 - 20% |
| Fer total (exprimé sous forme de $Fe_2O_3$) | 0,002 - 0,06% |
| une teneur en cérium telle que : $0,001\% \le CeO_2 \le 1\%$, | |

dans un dispositif utilisant un rayonnement infrarouge se propageant essentiellement à l'intérieur de ladite feuille.

14. Utilisation selon la revendication précédente, **caractérisée en ce que** la propagation du rayonnement infrarouge se fait par réflexion totale interne.

15. Utilisation selon l'une des revendications précédentes d'utilisation, **caractérisée en ce que** la composition comprend une teneur en fer total (exprimée sous forme de $Fe_2O_3$) de 0,002 à 0,04% en poids par rapport au poids total du verre.

Europäisches
Patentamt

European
Patent Office

Office européen
des brevets

**RAPPORT DE RECHERCHE EUROPEENNE**

Numéro de la demande

EP 13 19 3345

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 6 461 736 B1 (NAGASHIMA YUKIHITO [JP] ET AL) 8 octobre 2002 (2002-10-08) * Ex. comp. 5; figure 4; exemples 7-12; tableau 4 * | 1-15 | INV. C03C3/095 C03C4/10 |
| X | WO 2012/126394 A1 (SCHOTT GLASS TECHNOLOGIES SUZHOU CO LTD [CN]; ZHANG GUANGJUN [CN]; LAU) 27 septembre 2012 (2012-09-27) * page 27, ligne 4-18; revendications; exemples 3,10 * | 1-5,7-15 | |
| X | WO 2012/108417 A1 (NIPPON ELECTRIC GLASS CO) 16 août 2012 (2012-08-16) * alinéa [0110]; revendications; exemple 14 * | 1,2,5, 7-15 | |
| X | US 2007/161492 A1 (SMITH DENNIS G [US] ET AL) 12 juillet 2007 (2007-07-12) * alinéas [0002], [0005] - [0007], [0009] - [0017]; revendications; exemples 1-4; tableaux 1,3 * | 1-10 | DOMAINES TECHNIQUES RECHERCHES (IPC) |
| X | JP 2007 238398 A (NIPPON SHEET GLASS CO LTD) 20 septembre 2007 (2007-09-20) * Ex. comp. 4; revendications; exemples; tableau 1 * | 1-8,10 | C03C |
| X | US 2004/157722 A1 (KOYAMA AKIHIRO [JP] ET AL) 12 août 2004 (2004-08-12) * revendications; exemples 8-18 * | 1-8,10 | |
| X | US 2007/209698 A1 (THOMSEN SCOTT V [US] ET AL) 13 septembre 2007 (2007-09-13) * revendications; figure 1; exemples * | 1-3,7-10 | |

Le présent rapport a été établi pour toutes les revendications

| Lieu de la recherche | Date d'achèvement de la recherche | Examinateur |
|---|---|---|
| Munich | 15 mai 2014 | Wrba, Jürgen |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 19 3345

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-05-2014

| Document brevet cité au rapport de recherche | | Date de publication | Membre(s) de la famille de brevet(s) | | Date de publication |
|---|---|---|---|---|---|
| US 6461736 | B1 | 08-10-2002 | CA | 2342910 A1 | 16-03-2000 |
| | | | DE | 69929891 T2 | 24-08-2006 |
| | | | EP | 1116699 A1 | 18-07-2001 |
| | | | US | 6461736 B1 | 08-10-2002 |
| | | | WO | 0014021 A1 | 16-03-2000 |
| WO 2012126394 | A1 | 27-09-2012 | CN | 102690059 A | 26-09-2012 |
| | | | WO | 2012126394 A1 | 27-09-2012 |
| WO 2012108417 | A1 | 16-08-2012 | CN | 103298758 A | 11-09-2013 |
| | | | JP | 2012180262 A | 20-09-2012 |
| | | | KR | 20130135905 A | 11-12-2013 |
| | | | TW | 201233657 A | 16-08-2012 |
| | | | US | 2013316162 A1 | 28-11-2013 |
| | | | WO | 2012108417 A1 | 16-08-2012 |
| US 2007161492 | A1 | 12-07-2007 | CA | 2636754 A1 | 02-08-2007 |
| | | | CN | 101370743 A | 18-02-2009 |
| | | | EP | 1984306 A1 | 29-10-2008 |
| | | | US | 2007161492 A1 | 12-07-2007 |
| | | | WO | 2007087125 A1 | 02-08-2007 |
| JP 2007238398 | A | 20-09-2007 | AUCUN | | |
| US 2004157722 | A1 | 12-08-2004 | CN | 1408663 A | 09-04-2003 |
| | | | CN | 1872749 A | 06-12-2006 |
| | | | EP | 1291330 A2 | 12-03-2003 |
| | | | KR | 20030021144 A | 12-03-2003 |
| | | | US | 2003125188 A1 | 03-07-2003 |
| | | | US | 2004157722 A1 | 12-08-2004 |
| | | | US | 2004162212 A1 | 19-08-2004 |
| US 2007209698 | A1 | 13-09-2007 | BR | PI0709394 A2 | 05-07-2011 |
| | | | CA | 2641929 A1 | 20-09-2007 |
| | | | EP | 1993961 A1 | 26-11-2008 |
| | | | RU | 2008140311 A | 20-04-2010 |
| | | | US | 2007209698 A1 | 13-09-2007 |
| | | | US | 2009217978 A1 | 03-09-2009 |
| | | | WO | 2007106223 A1 | 20-09-2007 |

EPO FORM P0460

Pour tout renseignement concernant cette annexe : voir Journal Officiel de l'Office européen des brevets, No.12/82

**EP 2 873 653 A1**

## RÉFÉRENCES CITÉES DANS LA DESCRIPTION

**Documents brevets cités dans la description**

- US 2013021300 A1